# EUROPÄISCHE PATENTSCHRIFT

(11) **EP 3 140 840 B1**
(45) Veröffentlichungstag und Bekanntmachung des Hinweises auf die Patenterteilung: **06.01.2021**
(21) Anmeldenummer: 15709919.3
(22) Anmeldetag: 12.03.2015
(51) Int. Cl.: H01G 7/02, H04R 19/01

(54) **VERFAHREN ZUR HERSTELLUNG EINES MEHRSCHICHTIGEN ELEKTRET-BAUTEILS**
METHOD FOR PRODUCING A MULTILAYERED ELECTRET COMPONENT
PROCÉDÉ DE PRODUCTION D'UN COMPOSANT ÉLECTRET MULTICOUCHE

(30) Priorität: 08.05.2014 DE 102014208645
(43) Veröffentlichungstag der Anmeldung: 15.03.2017
(73) Patentinhaber: Robert Bosch GmbH, 70442 Stuttgart (DE)
(72) Erfinder: BARTYLLA, David, 71229 Leonberg (DE); MAIER, Nicolas, 70435 Stuttgart (DE); HIRTH, Erhard, 74248 Ellhofen (DE)
(86) Internationale Anmeldenummer: PCT/EP2015/055186
(87) Internationale Veröffentlichungsnummer: WO 2015/169485

(56) Entgegenhaltungen:
- JP-A- H11 219 852
- KR-A- 20040 011 242

## Beschreibung

### Stand der Technik

Die Erfindung bezieht sich auf ein Verfahren zur Herstellung eines mehrschichtigen Elektret-Bauteils und eine Elektretstruktur.

Als Elektrete werden Materialien bezeichnet, die elektrische Ladung im Inneren oder an der Oberfläche über einen längeren Zeitraum speichern können, so dass in ihnen ein weitgehend dauerhaftes elektrisches Feld ausgebildet wird. Der Begriff "Elektrete" wird beispielsweise auch für Materialien verwendet, die entgegengesetzte Ladungen an ihren Oberflächen aufweisen, wie bei elektrisch aufgeladenen Polymer-Folien. Verfahren zur elektrischen Aufladung (Polarisation) von Elektreten umfassen unter anderem thermische Prozesse, Gasentladungen und Bestrahlungen mit Elektronenstrahlen. Technische Anwendungen von Elektreten sind vielseitig, wie z.B. in Mikrophonen, Lautsprechern, als Strahlungsdetektoren und in Luftfiltern. Allerdings ist die technische Anwendbarkeit von Elektreten in starkem Maße davon abhängig, inwieweit eine ausreichend stabile Polarisation über eine annehmbare Lebensdauer bei anwendungsrelevanten Umgebungsbedingungen gewährleistet werden kann.

Elektrete können nach Materialien unterteilt werden. So können Elektrete aus organischem Material hergestellt sein, welche eine schlechte bis mittlere Ladungsstabilität aufweisen und als dünne Folien in günstiger Weise hergestellt werden können. Aus dem Stand der Technik sind eine Vielzahl als dielektrisches Material verwendbare Polymere bekannt, beispielsweise Polyethylen, Polypropylen und Polyethylen-Terephthalat, und insbesondere Teflon-Varianten, beispielsweise Polytetrafluoräthylen. Allerdings ist das Verhalten der Elektrete abhängig von der Natur der verwendeten Polymere, wobei insbesondere die Oberflächenpotentiale derartiger Elektrete bei höheren Temperaturen nicht sehr stabil sind. Insbesondere bei höheren Temperaturen wandern Ladungsträger durch den Elektreten, wobei Ladungsträger dadurch verloren gehen, dass diese aus dem Elektret in eine kontaktierende Elektrode wandern und abgeführt oder kompensiert werden.

Ferner sind Elektrete aus anorganischen Materialien bekannt, welche eine hohe Stabilität gegen thermische Entladungsvorgänge zeigen und bei hohen Temperaturen angewandt werden können, aber eine hohe Empfindlichkeit gegen Entladung durch oberflächliche Berührung oder Verunreinigung aufweisen.

Allerdings besteht nach wie vor ein Bedarf an Elektreten, deren Elektreteigenschaft, insbesondere die Stabilität der Ladungstrennung über einen langen Zeitraum bei anwendungsrelevanten Umgebungsbedingungen, beispielsweise bei höheren Temperaturen und unter Beachtung der Feuchtigkeit, gewährleistet ist. Insbesondere bei hohen Temperaturen können Ladungsträger aus dem Elektret wandern, wobei Ladungsträger beispielsweise dadurch verloren gehen, dass die Ladungsträger durch das Elektret über eine kontaktierende Elektrode abgeführt oder kompensiert werden. Insbesondere Elektrete, deren Ladungsträger primär an der Oberfläche gespeichert sind, laufen Gefahr des Ladungsverlustes bei Berührung während der Herstellung oder im Betrieb und durch Verunreinigung ihrer Oberfläche mit leitfähigen oder entgegengesetzt geladenen Materialien, beispielsweise Staub.

Aus US 7 706 554 B2 ist ein Elektret-Kondensator für ein miniaturisiertes Mikrophon bekannt mit einem Elektretelement, umfassend eine Schicht aus Siliziumdioxid, die durch ein Galvanisierungsverfahren zum Elektret wird und eine diese abdeckende Schutzschicht aus Siliziumnitrid, zum Schutz gegen Luftfeuchtigkeit. Hierbei sind die Ladungsträger unter der Oberfläche des Schichtaufbaus an der Grenzfläche zwischen Siliziumoxid und Siliziumnitrid gebunden, so dass die Empfindlichkeit des Elektrets gegenüber Einflüssen, beispielsweise der Luftfeuchte und anderen Umgebungsbedingungen reduziert ist.

Aus DE 42 15 983 A1 ist eine Elektretstruktur bekannt, wobei die ladungsspeichernde Schicht als eine inhomogene Materialzusammensetzung ausgebildet ist. Die ladungsspeichernde Schicht ist als Schichtenfolge ausgebildet mit mindestens drei Schichten, wobei die mittlere Schicht einen großen Einfangquerschnitt für Ladungsträger aufweist und die beiden äußeren Schichten als Potentialbarrieren fungieren. Die Funktionen der sich unterscheidenden Schichten werden durch entsprechende Materialien bereitgestellt, beispielsweise eignet sich für die mittlere Schicht Si₃N₄ und für die äußeren Schichten SiO₂.

Aus dem Dokument JP H11-219852 A ist ein Elektretelement bekannt, welches auf der Oberfläche einer Elektrode angeordnet ist. Als Elektrode dient hier eine Schicht (14), welche ein hochdotierter Bereich eines Siliziumsubstrats (16) ist. Auf die Elektrodenschicht (14) wird eine halbleitende Siliziumschicht (12) mit einer Epitaxiemethode abgeschieden. Auf die Siliziumschicht (12) wiederum wird eine Schicht (10) aus Siliziumdioxid abgeschieden, die als Elektret dient. Zum Aufladen der Siliziumdioxidschicht können bekannte Verfahren wie beispielsweise eine Koronaentladung oder das Bestrahlen mit einem Elektronenstrahl verwendet werden.

Das Dokument KR 10 2004 0011242 A beschreibt ein Elektret, beispielsweise zur Verwendung mit einem Elektretmikrophon. Zur Herstellung des Elektrets wird ein Siliziumwafer zunächst gereinigt und anschließend werden mehrere Schichten aus Siliziumdioxid und Siliziumnitrit in alternierender Reihenfolge abgeschieden. In einem nachfolgenden Schritt wird eine Teflonschicht aufgetragen, beispielsweise durch Spincoating. Nach dem Zuschneiden des Elektretelements wird dieses mit einer Koronaentladung aufgeladen.

In Elektretmaterialien werden Oberflächen- und/oder Raumladungen in Fallenzuständen, auch als Potentialtöpfe, Potentialmulden oder Traps bezeichnet, gespeichert, die sich zwischen Leitungs- und Valenzband befinden, wobei mehrlagige Elektretelemente Unterschiede der Leitungsbänder unterschiedlicher dielektrischer Materialien nutzen.

Für die Verwendung von Elektreten im Automobilbereich sind eine gleichbleibende Performance über einen langen Zeitraum, über mehrere Jahre hinweg, auch bei stark wechselnden Bedingungen erforderlich, so dass nach wie vor ein Bedarf an geeigneten Materialien, Aufbau und Herstellungsverfahren besteht.

### Offenbarung der Erfindung

Erfindungsgemäß werden ein Verfahren zur Herstellung der Elektretstruktur gemäß Anspruch 1 und eine Elektretstruktur gemäß Anspruch 4 vorgeschlagen. Die Elektretstruktur umfasst eine ladungsspeichernde Schicht mit einer dielektrischen Materialzusammensetzung, welche als Schichtenfolge dielektrischer Materialien ausgebildet ist, die sich hinsichtlich thermischer Ladungsträgerstabilität unterscheiden.

Die Elektretstruktur in einem Mehrschichtaufbau umfasst insbesondere eine erste Elektretschicht aus einem anorganischen Elektretmaterial, beispielsweise SiO₂, welches auf einer Oberfläche eines Substrats, bzw. auf die Oberfläche einer Elektrode aufgebracht wird. Die Elektretmaterialien SiO₂, Si₃N₄ oder Al₂O₃ zeichnen sich durch eine hohe Ladungsträgerstabilität bei hoher Temperatur aus, sie können in kleinen Dicken realisiert werden und sind geeignet, leicht auf einer Substratoberfläche fixiert zu werden. Ferner kann durch eine Implantation von lokalen Störstellen mittels Fremdatomen das Elektretmaterial modifiziert werden.

Weitere geeignete für die erste Elektretschicht geeignete Elektretmaterialien sind Glas oder keramische Materialien, in denen die Ladungsträger erst bei höheren Temperaturen, insbesondere bei Temperaturen größer 100°C, eine nennenswerte Mobilität zeigen, so dass sich demnach das Glas bzw. das keramische Material durch eine lange Ladungsträgerstabilität auszeichnen. Geeignete Elektretmaterialien zeigen eine geringe Volumenleitung, wirken als Isolator, bilden Potentialbarrieren, bieten aber einen großen Einfangquerschnitt für Ladungsträger.

Das Elektretmaterial der ersten Elektretschicht kann durch physikalische und/oder chemische Abscheideprozesse direkt auf die Elektrodenoberfläche aufgebracht werden, bzw. alternativ kann ein Elektrodenmaterial durch geeignete Abscheideprozesse auf das Elektretmaterial aufgebracht werden. Physikalische bzw. chemische Abscheideprozesse sind beispielsweise eine physikalische Gasphasenabscheidung (PVD), eine chemische Gasphasenabscheidung (CVD), Bedampfung, thermische Spritzverfahren und Aufsprühen einer als Suspension oder Precursor-Lösung vorliegenden Zusammensetzung, sowie Aufdrucken.

Mittels eines bekannten Verfahrens kann das Elektretmaterial der ersten Elektretschicht als dünne Folie oder Film hergestellt sein, welches in geeigneter Weise mit dem Elektrodenmaterial verbunden wird, beispielsweise verklebt wird. Zur Vermeidung eines Spannungsabfalls an der Grenzschicht zwischen Elektrodenmaterial und Elektretmaterial der ersten Elektretschicht und zur Verbesserung der Anbindung, bzw. des elektrischen Kontakts kann die der ersten Elektretschicht zugewandte Seite der Elektrode mit leitfähigem Material, z.B. Metall beschichtet, z,B. bedampft werden.

In einem folgenden Verfahrensschritt wird auf einer der Elektrodenoberfläche gegenüberliegenden Seite der ersten Elektretschicht eine zweite Schicht eines geeigneten Elektretmaterials aufgebracht, wobei sich das Material der zweiten Elektretschicht von dem Elektretmaterial der bereits aufgebrachten ersten Elektretschicht unterscheidet. Das dielektrische Material der zweiten Elektretschicht zeigt unterschiedliche Elektreteigenschaften, insbesondere eine geringe elektrische Leitfähigkeit und eine im Vergleich zum Elektretmaterial der ersten Elektretschicht geringere thermische Ladungsträgerstabilität, auch als Ladungsspeicherfähigkeit bezeichnet. Demnach zeigt ein für die zweite Elektretschicht geeignetes Elektretmaterial bereits bei geringeren Temperaturen eine deutliche Ladungsträgermobilität, insbesondere eine signifikante Volumenleitung. Die in die zweite Elektretschicht eingebrachte Ladung, welche als Oberflächen- oder Volumenladung aufgebracht bzw. eingebracht werden kann, wandert, insbesondere bei erhöhter Temperatur, aufgrund der Ladungsträgermobilität und der signifikanten Volumenleitung des Elektretmaterials durch das Volumen der zweiten Elektretschicht bis in den Grenzbereich zum Elektretmaterial der ersten Elektretschicht. In dem Grenzbereich werden die Ladungsträger aufgrund der geringen Ladungsträgermobilität in der ersten Elektretschicht eingefangen und in dem Grenzbereich lokalisiert gespeichert. Das Elektretmaterial der ersten Elektretschicht bildet demnach eine Potentialbarriere.

Geeignete Elektretmaterialien der aus einem organischen, dielektrischen Material gebildeten zweiten Elektretschicht in der mehrschichtigen Elektretstruktur sind beispielsweise in diesem Zusammenhang bekannte Polymere, wie Fluorpolymere. Die zu Elektreten verarbeitbaren, als dielektrisches Material verwendbaren Polymere sind aus dem Stand der Technik bekannt, wobei bisher als negativ die nicht ausreichende stabile Ladungsstabilität empfunden wurde, um in Elektrete mit annehmbarer Lebensdauer umgewandelt zu werden.

Das Aufbringen der zweiten Elektretschicht auf die erste Elektretschicht kann bei entsprechend geeignetem zweitem Elektretmaterial, beispielsweise im Falle von Teflon-AF mittels eines Druckprozesses erfolgen. Alternativ können aber auch bekannte Aufbau- und Verbindungstechnologien eingesetzt werden, beispielsweise kann die zweite Schicht mittels Auflaminieren, Rotationsbeschichtung oder Verkleben mit der ersten Elektretschicht aufgebracht werden.

Erfindungsgemäß wird nun die Elektretstruktur elektrisch aufgeladen. Zur elektrostatischen Aufladung von Elektretmaterialien sind unterschiedliche physikalische Mechanismen bekannt, um Überschussladung zu erzeugen und diese gegebenenfalls in das dielektrische Material zu transportieren. Dazu zählen thermische Prozesse, welche gleichzeitig Wärme und ein elektrisches Feld zur Wirkung bringen, aber auch Gasentladungen, Bestrahlung mit Elektronenstrahlen oder Kontaktelektrifizierung. Vorzugsweise erfolgt die Aufladung mittels einer Koronaentladung.

In einem folgenden Schritt wird die aufgeladene, mehrschichtige Elektretstruktur einer Temperaturbehandlung unterzogen. Die Elektretstruktur wird auf eine Temperatur erwärmt, bei der die an der Oberfläche oder in einem oberflächennahen Volumenbereich der zweiten Elektretschicht eingebrachten Ladungsträger aufgrund ihrer Mobilität schnell in das zweite Elektretmaterial eindringen und aufgrund der guten Volumenleitfähigkeit dieses Materials bis in den Grenzbereich zum Elektretmaterial der ersten Elektretschicht wandern. Da die Mobilität der Ladungsträger in der ersten Elektretschicht geringer ist, werden die Ladungsträger in dem Grenzbereich zwischen dem ersten Elektretmaterial und dem zweiten Elektretmaterial festgehalten, so dass eine Entladung durch Berührung oder Verschmutzung der Oberfläche nicht möglich ist. Die Temperatur, auf die die Elektretstruktur erwärmt wird, liegt in einem Bereich, der sich aufgrund der unterschiedlichen thermischen Ladungsträgermobilitäten der Elektretmaterialien ergibt. Vorzugsweise liegt für geeignete Elektretmaterialpaarungen die Temperatur im Bereich von 50°C bis 150°C.

Die Ladungsträger, welche sich in dem Grenzbereich zwischen erstem und zweitem Elektretmaterialien konzentrieren, werden dort festgehalten bzw. stabil gebunden, da das vorzugsweise anorganische Elektretmaterial der ersten Elektretschicht eine hohe Ladungsträgerstabilität aufweist. Eine Abwanderung der Ladungsträger aus dem Grenzbereich in Richtung Elektrode durch das Volumen der ersten Elektretschicht erfolgt aufgrund der geringen Volumenleitung dieses Materials erst bei höheren Temperaturen, beispielsweise im Falle von SiO₂ bei Temperaturen oberhalb 200°C. Bei einem Elektretmaterial für die zweite Elektretschicht, welches gekennzeichnet ist durch eine bereits bei Raumtemperatur geringe Ladungsträgerstabilität, d.h. falls eine ausreichend hohe Ladungsträgermobilität vorliegt, kann die Temperaturbehandlung durch eine über einen längeren Zeitraum erfolgende Lagerung der aufgeladenen, mehrschichtigen Elektretstruktur bei Raumtemperatur ersetzt werden.

### Vorteile der Erfindung

Die erfindungsgemäß vorgeschlagene Lösung zur Herstellung einer mehrschichtigen Elektretstruktur nutzt einerseits die gute Ladungsträgerstabilität, d.h. die geringe Mobilität der Ladungsträger und eine geringe Volumenleitung eines anorganischen Elektretmaterials, und andererseits die geringe Ladungsträgerstabilität des Elektretmaterials einer zweiten Elektretschicht, welche die erste Elektretschicht überdeckt.

Die erfindungsgemäße Elektretstruktur, ausgebildet als Schichtaufbau, zeichnet sich insgesamt durch eine hohe Ladungsträgerstabilität, eine gute Ladungsstabilität, eine Unempfindlichkeit gegenüber Feuchtigkeit und geringe Ladungsverluste bei Berührung oder Verunreinigungen aus.

Die erfindungsgemäße Elektretstruktur kombiniert eine lange Ladungsträgerstabilität einer ersten Elektretschicht mit einer Robustheit, welche sich durch die als Schutzschicht fungierende zweite Elektretschicht ergibt. Die gegen Luftfeuchtigkeit und Kontaminierung geschützte Elektretstruktur zeigt sich gegenüber Entladungsvorgängen stabil, insbesondere da sich ein wesentlicher Teil der Ladungsträger im Grenzbereich der zwei Elektretschichten konzentrieren, und demnach unter der Oberfläche der mehrschichtigen Elektretstruktur geschützt konzentriert sind.

Durch eine geschickte Materialwahl der Elektretstruktur können die Eigenschaften an die an einen Elektreten gestellten Anforderungen angepasst werden und Kosten reduziert werden. Demnach ist es nicht erforderlich, die Ladungsträgerstabilität eines Elektretmaterials dadurch zu verbessern, dass temperaturstabile Energieniveaus für die an der Oberfläche eines anorganischen Elektretmaterials befindlichen Ladungsträger durch Beschichtung mit einem bestimmten, womöglich kostenintensiven Material geschaffen werden. Vielmehr nutzt das erfindungsgemäße Verfahren die bereits durch das anorganische Elektretmaterial gegebene sehr gute Lagerungsträgerstabilität geschickt und kombiniert sie mit weiteren vorteilhaften Eigenschaften.

Das erfindungsmäße Verfahren basiert auf kostengünstigen Verfahrensschritten, beispielsweise kann die zweite Elektretschicht durch Siebdruck, Laminierung und vergleichbares aufgebracht werden. Dies erweist sich gegenüber den bisher eingesetzten Gasphasenbeschichtungsverfahren als wesentlich günstiger.

Insbesondere zeichnet sich das erfindungsgemäße Verfahren dadurch aus, dass ein Mehrschichtaufbau kostengünstig mittels bekannter Verfahren oberflächlich aufgeladen werden kann, welcher einer gezielten Temperaturbehandlung unterzogen wird, wobei die Ladungsträger aufgrund ihrer Mobilität durch die zweite Elektretschicht aber nicht durch die erste Elektretschicht in den Grenzbereich zwischen erster und zweiter Elektretschicht wandern und dort geschützt unter der Oberfläche des gesamten Mehrschichtaufbaus sind. Demnach befinden sich weitgehend keine beweglichen Ladungsträger mehr im Oberflächenbereich der Elektretstruktur, d.h. an der Oberfläche der zweiten Elektretstruktur, welche bei Berührung oder Verschmutzung abfließen könnten.

### Kurze Beschreibung der Zeichnungen

Weitere Vorteile und Ausführungsformen der erfindungsgemäßen Gegenstände werden durch die Zeichnungen veranschaulicht und in der nachfolgenden Beschreibung näher erläutert.
Es zeigen:
- Figur 1: eine prinzipielle Elektretstruktur mit einem mehrschichtigen Aufbau im Querschnitt;
- Figur 2: eine Aufladung der mehrschichtigen Elektretstruktur;
- Figur 3: eine erfindungsgemäße Elektretstruktur nach einer Aufladung und einer Wanderung der Ladungsträger bei einer Temperaturbehandlung.

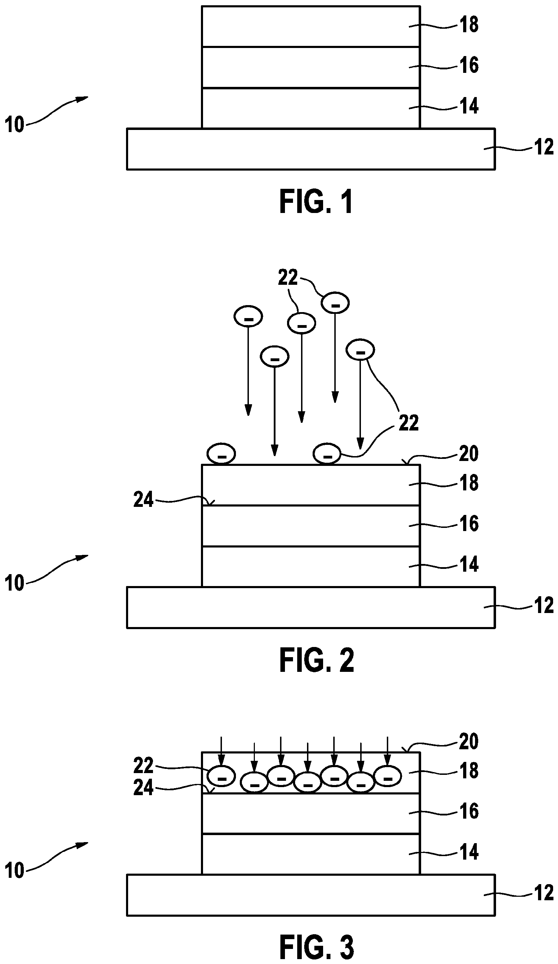

Aus der Darstellung Figur 1 geht eine Elektretstruktur 10 hervor, welche einen Träger 12 umfasst. An einer Oberfläche des Trägers 12 befindet sich eine Elektrode 14 aus einem leitfähigen Material, beispielsweise einem Metall, insbesondere Aluminium oder einem Leitkleber. An der dem Träger 12 gegenüberliegenden Seite der Elektrode 14 ist eine erste Elektretschicht 16 aus einem ersten Elektretmaterial angeordnet. Die erste Elektretschicht 16 umfasst ein dielektrisches Material, welches als Isolator wirkt und ein anorganisches Material ist. Geeignete Materialien sind SiO₂ oder andere dielektrische Materialien, welche eine gute Ladungsträgerspeicherfähigkeit aufweisen, d.h. eine hohe Temperaturstabilität, geringe Volumenleitung und geringe Ladungsträgermobilität. Die Dicke der ersten Elektretschicht 16 beträgt 10 bis 50 µm, vorzugsweise 10 bis 20 µm. Insbesondere seien anorganische Materialien, z.B. Gläser oder Keramiken genannt.

Auf der ersten Elektretschicht 16 befindet sich eine zweite Elektretschicht 18, die ebenfalls aus einem dielektrischen Material ist, sich aber von demjenigen der ersten Elektretschicht 16 unterscheidet. Insbesondere zeichnet sich die zweite Elektretschicht 18 durch eine im Vergleich zur ersten Elektretschicht 16 gute Volumenleitung aus. Erfindungsgemäß besteht die zweite Elektretschicht 18 aus einem organischen Material mit einer im Vergleich zur ersten Elektretschicht 16 geringen thermischen Ladungsträgerstabilität, beispielsweise Teflon-AF. Die zweite Elektretschicht 18 kann kostengünstig mittels eines Druckprozesses auf die erste Elektretschicht 16, umfassend ein anorganisches Material, aufgebracht werden. Alternative Aufbau- oder Verbindungsverfahren sind Auflaminieren, Verkleben, Spin Coating und weitere.

In Figur 2 ist die Elektretstruktur 10 dargestellt, welche nach dem Schichtaufbau einem Aufladungsvorgang unterzogen wird. Die Elektretstruktur 10 wird an einer Oberfläche 20, durch aus dem Stand der Technik bekannte Verfahren aufgeladen. Insbesondere werden mittels Koronaentladung Ladungsträger 22 auf der Oberfläche 20, d.h. auf der Oberfläche 20 der zweiten Elektretschicht 18 abgeschieden. Bzw. im Falle einer Aufladung der zweiten Elektretschicht 18 mittels hochenergetischer Elektronenstrahlen, werden die Ladungsträger 22 in einen oberflächennahen Volumenbereich der zweiten Elektretschicht 18 eingebracht.

Folgend oder während des Aufladevorganges wird die Elektretstruktur 10 in einer Ausführungsform einer Temperaturbehandlung unterzogen, wobei die Elektretstruktur 10 auf eine erhöhte Temperatur erwärmt wird. Die Temperatur liegt in einem Bereich, bei dem das vorzugsweise organische Material der zweiten Elektretschicht 18 eine signifikante Ladungsträgermobilität zeigt, so dass die auf der Oberfläche 20 entladenen Ladungsträger 22 in das Volumen der zweiten Elektretschicht 18 wandern, bzw. diese weiter durch das Volumen der zweiten Elektretschicht 18 bis in einen Grenzbereich zwischen zweiter Elektretschicht 18 und erster Elektretschicht 16 wandern, wie dies in Figur 3 angedeutet ist. Gleichzeitig ist die Temperatur so zu wählen, dass das Material der ersten Elektretschicht 16 keine signifikante Ladungsmobilität zeigt. Es ist nicht zu erwarten, dass die aufgeladenen Ladungsträger 22 in einer einzelnen scharf abgegrenzten Front in dem Grenzbereich vorliegen, d.h. insbesondere unmittelbar an einer Grenzfläche 24 zwischen erster Elektretschicht 16 und zweiter Elektretschicht 18. Vielmehr werden sich die Ladungsträger 22 in einem mehr oder weniger breiten Grenzbereich konzentrieren und einige, vorzugsweise wenige Ladungsträger 22 sind bereits durch energetisch günstige Fangstellen bzw. Traps im Volumen der zweiten Elektretschicht 18 eingefangen und stabil gebunden. Die geeignete Temperatur liegt für die vorzugsweise organischen Elektretmaterialien der zweiten Elektretschicht 18 in einem Bereich von 50°C bis 150°C.

Die in den Grenzbereich gewanderten Ladungsträger 22 liegen demnach unterhalb der Oberfläche 20 der Elektretstruktur 10 und werden insbesondere an der Grenzfläche 24 stabil gebunden, da das vorzugsweise anorganische Material der ersten Elektretschicht eine signifikante Ladungsträgermobilität erst bei hohen Temperaturen, insbesondere bei Temperaturen > 200°C aufweisen. Da die Ladungsträger 22 unterhalb der Oberfläche 20 konzentriert sind, ergibt sich für die Elektretstruktur 10 eine gesteigerte Unempfindlichkeit gegenüber Umwelteinflüssen, beispielsweise Feuchtigkeit und/oder Verschmutzung und gegenüber Berührung.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereiches eine Vielzahl von Abwandlungen möglich, die im Rahmen fachmännischen Handelns liegen.

## Patentansprüche

1. Verfahren zur Herstellung einer mehrschichtigen Elektretstruktur (10), umfassend folgende Verfahrensschritte:
a) Bereitstellen eines Trägers (12) mit einer Elektrode (14) aus leitfähigem Material:
b) Aufbringen einer ersten Elektretschicht (16) auf die Elektrode (14);
c) Aufbringen einer zweiten Elektretschicht (18) auf die erste Elektretschicht (16) zur Bildung der mehrschichtigen Elektretstruktur (10);
d) Aufladung einer Oberfläche (20) oder eines oberflächennahen Volumenbereichs der zweiten Elektretschicht (18) mit Ladungsträgern (22);
e) Unterziehen der mehrschichtigen Elektretstruktur (10) einer Behandlung, wobei die Ladungsträger (22) in das Volumen der zweiten Elektretschicht (18) abfließen und in einem Grenzbereich zwischen erster Elektretschicht (16) und zweiter Elektretschicht (18) festgehalten werden,
**dadurch gekennzeichnet, dass** die erste Elektretschicht (16) aus einem anorganischen dielektrischen Material gebildet wird mit einer hohen thermischen Ladungsträgerstabilität und dass die zweite Elektretschicht (18) aus einem organischen, dielektrischen Material gebildet wird mit einer geringen thermischen Ladungsträgerstabilität, so dass die thermische Ladungsträgerstabilität der ersten Elektretschicht (16) höher ist als die der zweiten Elektretschicht (18), wobei Schritt e) eine Temperaturbehandlung ist, wobei die Temperatur derart gewählt ist, dass die aufgeladenen Ladungsträger (22) eine signifikante Mobilität in dem Volumen der zweiten Elektretschicht (18) haben und eine nicht signifikante in der ersten Elektretschicht (16), so dass die Mobilität der aufgeladenen Ladungsträger (22) in der zweiten Elektretschicht (18) höher ist als in der ersten Elektretschicht (16).

2. Verfahren nach Anspruch 1, **dadurch gekennzeichnet, dass** die zweite Elektretschicht (18) mittels eines Aufbau- und Verbindungstechnikverfahrens auf die erste Elektretschicht (16) aufgebracht wird, vorzugsweise mittels eines Druckverfahrens, durch Auflaminierung, Spin Coating oder Verklebung.

3. Verfahren nach einem der vorhergehenden Ansprüche, **dadurch**
**gekennzeichnet, dass** Schritt d) eine Koronaentladung, Gasentladungen, Bestrahlung mit Elektronenstrahlen oder Kontaktelektrifizierung umfasst.

4. Elektretstruktur (10), hergestellt nach einem Verfahren gemäß einem der vorhergehenden Ansprüche, wobei die Elektretstruktur (10) ein mehrschichtiger Aufbau ist mit mindestens einer ersten und zweiten Elektretschicht (16, 18), welche sich hinsichtlich der thermischen Ladungsträgerstabilität unterscheiden.

5. Elektretstruktur (10) nach Anspruch 4, **dadurch gekennzeichnet, dass** die aufgebrachten und/oder eingebrachten Ladungsträger (22) unterhalb einer Oberfläche (20) der Elektretstruktur (10) in einem Grenzbereich zwischen erster und zweiter Elektretschicht (16, 18) stabil gebunden sind.

6. Elektretstruktur (10) nach Anspruch 4 oder 5, **dadurch gekennzeichnet, dass** das dielektrische Material der ersten Elektretschicht (16) ausgewählt ist aus SiO₂, Si₃N₄, Al₂O₃, Glas oder Keramik.

7. Elektretstruktur (10) nach einem der Ansprüche 4 bis 6, **dadurch**
**gekennzeichnet, dass** das dielektrische Material der zweiten Elektretschicht (18) ein Polymer ist.

## Claims

1. Method for producing a multilayered electret structure (10), comprising the following method steps:
a) providing a carrier (12) with an electrode (14) composed of conductive material;
b) applying a first electret layer (16) to the electrode (14);
c) applying a second electret layer (18) to the first electret layer (16) in order to form the multilayered electret structure (10);
d) charging a surface (20) or a near-surface volume region of the second electret layer (18) with charge carriers (22);
e) subjecting the multilayered electret structure (10) to a treatment, wherein the charge carriers (22) flow away into the volume of the second electret layer (18) and are retained in a boundary region between first electret layer (16) and second electret layer (18),
**characterized in that** the first electret layer (16) is formed from an inorganic dielectric material with a high thermal charge carrier stability, and **in that** the second electret layer (18) is formed from an organic dielectric material with a low thermal charge carrier stability, such that the thermal charge carrier stability of the first electret layer (16) is higher than that of the second electret layer (18), wherein step e) is a thermal treatment, wherein the temperature is chosen such that the charged charge carriers (22) have a significant mobility in the volume of the second electret layer (18) and a non-significant mobility in the first electret layer (16), such that the mobility of the charged charge carriers (22) is higher in the second electret layer (18) than in the first electret layer (16) .

2. Method according to Claim 1, **characterized in that** the second electret layer (18) is applied to the first electret layer (16) by means of a construction and connection technology method, preferably by means of a printing method, by lamination, spin coating or adhesive bonding.

3. Method according to either of the preceding claims,
**characterized in that** step d) comprises a corona discharge, gas discharges, irradiation with electron beams or contact electrification.

4. Electret structure (10), produced according to a method according to any of the preceding claims, wherein the electret structure (10) is a multilayered construction having at least a first and second electret layer (16, 18), which differ with regard to the thermal charge carrier stability.

5. Electret structure (10) according to Claim 4,
**characterized in that** the applied and/or introduced charge carriers (22) are bound stably below a surface (20) of the electret structure (10) in a boundary region between first and second electret layers (16, 18).

6. Electret structure (10) according to Claim 4 or 5,
**characterized in that** the dielectric material of the first electret layer (16) is selected from SiO₂, Si₃N₄, Al₂O₃, glass or ceramic.

7. Electret structure (10) according to any of Claims 4 to 6, **characterized in that** the dielectric material of the second electret layer (18) is a polymer.

## Revendications

1. Procédé de production d'une structure d'électret multicouche (10), le procédé comprenant les étapes suivantes :
a) pourvoir un support (12) d'une électrode (14) en matériau conducteur ;
b) appliquer une première couche d'électret (16) sur l'électrode (14) ;
c) appliquer une deuxième couche d'électret (18) sur la première couche d'électret (16) pour former la structure d'électret multicouche (10) ;
d) charger une surface (20) ou une région de volume, proche de la surface, de la deuxième couche d'électret (18) avec des porteurs de charge (22) ;
e) soumettre la structure d'électret multicouche (10) à un traitement, les porteurs de charge (22) s'écoulant jusque dans le volume de la deuxième couche d'électret (18) et étant maintenus dans une région limite entre la première couche d'électret (16) et la deuxième couche d'électret (18),
**caractérisé en ce que** la première couche d'électret (16) est formée à partir d'un matériau diélectrique minéral ayant une stabilité de porteur de charge thermique élevée et **en ce que** la deuxième couche d'électret (18) est formée à partir d'un matériau diélectrique organique ayant une stabilité de porteur de charge thermique faible, de sorte que la stabilité de porteur de charge thermique de la première couche d'électret (16) soit supérieure à celle de la deuxième couche d'électret (18), l'étape e) étant un traitement thermique, la température étant choisie de telle sorte que les porteurs de charge chargés (22) aient une mobilité significative dans le volume de la deuxième couche d'électret (18) et une mobilité non significative dans la première couche d'électret (16) de sorte que la mobilité des porteurs de charge chargés (22) dans la deuxième couche d'électret (18) soit plus élevée que celle dans la première couche d'électret (16) .

2. Procédé selon la revendication 1, **caractérisé en ce que** la deuxième couche d'électret (18) est appliquée sur la première couche d'électret (16) au moyen d'un procédé de technologie de montage et de liaison, de préférence au moyen d'un procédé d'impression, par laminage, enduction centrifuge (spin coating) ou collage.

3. Procédé selon l'une des revendications précédentes, **caractérisé en ce que** l'étape d) comprend une décharge corona, des décharges gazeuses, une irradiation avec des faisceaux d'électrons ou une électrification de contact.

4. Structure d'électret (10), réalisée par un procédé selon l'une des revendications précédentes, la structure d'électret (10) étant une structure multicouche comprenant au moins une première et une deuxième couche d'électret (16, 18) qui diffèrent en termes de stabilité du porteur de charge thermique.

5. Structure d'électret (10) selon la revendication 4, **caractérisée en ce que** les porteurs de charge appliqués et/ou introduits (22) sont liés de manière stable sous une surface (20) de la structure d'électret (10) dans une région limite située entre les première et deuxième couches d'électret (16, 18).

6. Structure d'électret (10) selon la revendication 4 ou 5, **caractérisée en ce que** le matériau diélectrique de la première couche d'électret (16) est choisi parmi SiO₂, Si₃N₄, Al₂O₃, du verre ou de la céramique.

7. Structure d'électret (10) selon l'une des revendications 4 à 6, **caractérisée en ce que** le matériau diélectrique de la deuxième couche d'électret (18) est un polymère.
